**Europäisches Patentamt**

**European Patent Office**

**Office européen des brevets**

(11) Veröffentlichungsnummer: **0 186 652**
**B1**

(12) **EUROPÄISCHE PATENTSCHRIFT**

(45) Veröffentlichungstag der Patentschrift:
19.04.89

(21) Anmeldenummer: **85890277.8**

(22) Anmeldetag: **08.11.85**

(51) Int. Cl.⁴: **A 01 N 37/02**, A 01 N 59/16 //
(A01N59/16, 37:02),
(A01N37/02, 37:02)

(54) Schutz- und Bekämpfungsmittel gegen Schäden an der Vegetation.

(30) Priorität: 08.11.84 AT 3532/84

(43) Veröffentlichungstag der Anmeldung:
02.07.86 Patentblatt 86/27

(45) Bekanntmachung des Hinweises auf die Patenterteilung:
19.04.89 Patentblatt 89/16

(84) Benannte Vertragsstaaten:
BE CH DE FR GB IT LI LU NL SE

(56) Entgegenhaltungen:
DE-A-3 308 183
US-A-4 400 285

(73) Patentinhaber: **Gesellschaft für Forschung und Entwicklung von neuen Bautechnologien und Baustoffen Gesellschaft m.b.H., Seilerstätte 13-25, A-1010 Wien (AT)**

(72) Erfinder: **Washüttl, Josef, Prof. Dr. Dipl.- Ing., Gnedgasse 14- 16, A-1130 Wien (AT)**

(74) Vertreter: **Berger, Erhard, Dr., Siebensterngasse 39 Postfach 306, A-1071 Wien (AT)**

**Beschreibung**

Die gegenständliche Erfindung betrifft ein Schutz- und Bekämpfungsmittel gegen Schäden an der Vegetation beispielsweise an jungen Nadelbäumen, verursacht durch Ernährungsstörungen, insbesondere ausgelöst durch sauren Regen bzw. saure Immissionen. Wie diverse wissenschaftliche Untersuchungen und Publikationen zeigen, sind für die genannten Schäden verschiedene Ursachen verantwortlich.

Einerseits werden die vorhandenen Schäden auf Immissionen von Schwefeldioxid ($SO_2$) und Stickoxiden ($NO_x$) bzw. auf Schwefel- und Salpetersäure im sauren Regen zurückgeführt, andererseits sind aber nach neuesten Untesuchungen Ernährungsstörungen bei der Vegetation verantwortlich. Diesbezüglich sind nämlich Schwerpunkte des sogenannten "Baumsterbens" auf sauren, magnesium- und kalkarmen, wasserdurchlässigen Böden beobachtet worden. Eine hohe Niederschlagsrate führt weiters dazu, daß die ohnehin nur geringen Mengen an Magnesium, Kalzium aber auch zum Teil an Kalium ausgewaschen werden, in Minimum geraten und der Boden pH-Wert in den sauren Bereich absinkt. Zu dieser ökosystemeigenen $H^+$-Produktion kommen nun auch noch die bereits erwähnten sauren ökosystemfremden Immissionsbeiträge hinzu, so daß viele Waldböden einen pH-Wert von 3,5 - 4,5 aufweisen. Ebensolche Werte wurden auch häufig auf der Blattoberfläche sowie im sauren Regen beobachtet.

Als Folge dieser kombinatorischen Wirkung ergeben sich folgende Grundsysteme der Vegetationsschäden:

a) Vergilbungen der Flora, insbesondere der Bäume, in folge Magnesium- und eventuell Calcium-Mangels)
b) Verbräunung von Nadeln und Blättern mit Nekrosen in folge Kalium-Mangels
c) chlorotische Neutriebe infolge Eisen- und Manganmangels
d) unregelmäßige Verätzungen und Nekrosen durch saure pH-Werte an Vegetationsteilen.

Die Erfindung hat sich daher zur Aufgabe gestellt, die genannten Nährstoffe wie insbesondere Calcium und Magnesium und auch geringe Mengen an Kalium-, Eisen- und Manganverbindungen in wasserlöslicher Form dem Biotop zur Verfügung zu stellen, wobei speziell die beiden Hauptnährstoffe $Ca^{++}$ und $Mg^{++}$ in Acetat-Form verabreicht werden. Dies hat nämlich den Vorteil, daß diese Verbindungen einerseits besonders gut wasserlöslich sind und andererseits durch geringe Mengen an Säuren (Essigsäure) und basischen Substanzen (bevorzugt Oxyde, Hydroxyde und Karbonate von Calcium und Magnesium) ein gut wirksames Puffersystem für einen pH-Bereich von 6,5 bis 9,5 abgestuft je nach Säurebelastung und Säuregrad des Biotops, erzielt wird. Das erfindungsgemäße Schutz- und Bekämpfungsmittel gegen Schäden an der Vegetation beispielsweise an jungen Nadelbäumen, verursacht durch Ernährungsstörungen, insbesondere ausgelöst durch sauren Regen bzw. saure Immissionen auf magnesium- und kalkarmen Böden bzw. bei diesbezüglichen Mangelerscheinungen der Pflanzen in gelöster, suspendierter oder fester Form, enthaltend Calcium- und Magnesiumsalze sowie geringe Mengen wasserlöslicher Kalium-, Eisen- und Manganverbindungen, ferner Stabilisatoren, sowie bei flüssigen Formulierungen bei Applikation im Wege über die Blätter bzw. Nadeln, auch Netzmittel ist demnach dadurch gekennzeichnet, daß das Mittel Calcium- und Magnesiumacetat und zusätzlich saure oder alkalische Komponenten in einer solchen Menge enthält, daß eine 0,1 bis 10 %-ige wäßrige Lösung bzw. Suspension mit einem Dispergiermittel einen pH-Wert von mindestens 6,5 und maximai 9,0 aufweist.

Man unterscheidet zwischen acidophilen und acidophoben Pflanzen.

So fordern bestimmte Nadelhölzer niedere pH-Werte (z. B. 6,5 und tiefer), hingegen manche Laubgehölze, insbesondere Kulturpflanzen, höhere pH-Werte (bis pH 8).

Um nun diese Reaktionsparameter zu erreichen, muß insbesondere im Hinblick auf die durch den sauren Regen in den höheren pH-Bereichen (z. B. 7 - 8) erfolgende Verschiebung zu niederen pH-Werten (trotz der Pufferung ist die Pufferkapazität bei pH 7,5 relativ nieder, vgl. Tabelle 2) mit höheren Ausgangs-pH-Werten in den Formulierungen gearbeitet worden (z. B. pH 9 und 8 für basophile bzw. 6,5 für acidophile Pflanzen), insbesondere wenn mit einer hohen Belastung durch den sauren Regen gerechnet werden muß, um den für die jeweiligen Pflanzen optimalen pH-Wert in etwa zu erreichen.

Aus den angeführten Gründen ist daher eine Einstellung der diversen Formulierungen auf verschiedene pH-Werte notwendig.

Ein weiterer wesentlicher Aspekt besteht darin, daß man das obige Substanzgemisch dem Boden der geschädigten Vegetation in fester oder flüssiger Form zuführt, oder im Hinblick auf einen schnellen Wirkungseintritt aus der Luft direkt auf Blätter oder Nadeln in wäßriger Lösung bzw. Suspension appliziert, wobei hierfür je nach Schadensausmaß und Säurebelastung der Vegetationsoberfläche ein entsprechender Wert bzw. Konzentration zu wählen ist.

Auch eine Applikation in Pulverform mit inerter Trägersubstanz ist bei feuchter Blatt- bzw. Nadeloberfläche möglich.

Im Hinblick auf die speziell defizitäre Magnesiumbilanz sollte das Mittel maximal 90 Gewichtsprozent, vorzugsweise aber 30 bis 60, Gewichtsprozent Magnesiumacetat enthalten, sowie als 2. Hauptkomponente Calciumacetat, welches infolge Ionenantagonismus die allfällige toxische Wirkung eines "Einsalzsystems" (nämlich Magnesium) verhindert. Gleichfalls muß aufgrund obiger Ausführungen die entsprechende Restmenge in dem gegenständlichen Mittel an wasserlöslichen Kalium-, Eisen- und Manganverbindungen, erstere bevorzugt in der Acetatform, die beiden letzteren in Chelatform vorliegend (sehr gute Resorbierbarkeit durch Wurzel und Blatt), hinzugefügt werden.

Aus der GB-PS-1 029 155 ist ein Verfahren zur Behandlung von Pflanzensamen durch Beschichtung mit Calciumacetat (auch andere Stoffe wie z. B. Düngemittel möglich!), zwecks allfälliger Wachstumsstimulierung bekannt. Die gegenständliche Erfindung hat aber eine ganz andere Zielsetzung, beschreibt auch im Wirksamkeitsnachweis Kombinationen von Ca- und Mg-acetaten, sowie verschiedene essentielle Zusätze (Kaliumacetat, Eisen- und Manganverbindungen usw.). Entscheidend ist auch eine notwendige pH-Einstellung mit guter Pufferwirkung gegen simulierten "Sauren Regen".

Hinsichtlich den US-PS-214 888, 4 352 688 und 3 909 229 gelten sinngemäß die obigen Ausführungen.

Was die US-PS-4 214 888 betrifft, so beschreibt diese einen N-Blattdünger, bei dem die Pufferung u.a. mit NaOH/Essigsäure im pH-Bereich von 6 bis 7,6 erfolgt. Bei den vorliegenden Erfindung ist der Ca- und Mg-acetat-Gehalt eine wesentliche Komponente. Dadurch, daß die beiden Salze als Azetate vorliegen, wird durch die Zugabe von Säuren oder Basen eine Pufferwirkung erzielt. Darüberhinaus liegen, wie bereits erwähnt, andere essentielle Zusätze (Kaliumacetat, Eisen- und Manganverbindungen etc.) vor und es ist auch keine N-Düngemittelkomponente enthalten.

Die US-PS-4-352 688 enthält die Lehre, daß Acetat die Wirkung von N-Düngern verbessert. Dieser Aspekt ist für die gegenständliche Erfindung von ganz untergeordneter Bedeutung, da hier, wie bereits oben angeführt, keine N-Düngemittelkomponente vorliegt.

Die US-PS-3 909 229 betrifft einen Spezialdünger, der insbesondere hinsichtlich Zn-Mangel, Zinkacetat in ammoniakalischer, wäßriger Lösung enthält.

In der gegenständlichen Erfindung ist aber überhaupt kein Zinksalz enthalten.

Die DE-A-3 308 183 beschreibt ein Mittel zur Beseitigung und Verhinderung des Waldsterbens, gekennzeichnet durch einen Gehalt an Magnesium- und/oder Natrium- und/oder Sulfationen.

Für die weiter unten beschriebenen Anwendungsbeispiele wurden folgende Feststoffgemische hergestellt:

**Beispiel 1:**

30 % Gew. Magnesiumacetat          10 % Gew. Kaliumacetat
58 % Gew. Calciumacetat            2 % Gew. Na-EDTA

zu dieser Mischung werden in Form ihrer wasserlöslichen Salze hinzugefügt:
1 000 ppm Eisen (II) und 1 500 ppm Mangan.
Von diesem gesamten Feststoffgemisch wurden:

a) wäßrige Lösungen in den Konzentrationsstufen 10 %, 1 % und 0,1 %, bei Blatt bzw. Nadelapplikationen mit einem Zusatz von je 0,2 % des Netzmittels*) hergestellt, wobei entweder keine pH-Einstellung oder eine pH-Einstellung auf 6,5, 8,0 und 9,0 erfolgte.
b) 90 Gew.-% des Feststoffgemisches mit 10 Gew.-% $CaCO_3$ oder $MgCO_5$ vermischt.
c) von b) eine 1 %-ige und 10 %-ige Suspension unter Beigabe von 0,5 % des Dispergiermittels ligninsulfonsaures Natrium hergestellt (bei Blatt- und Nadelapplikation mit einem Zusatz von 0,2 % Netzmittel)
d) 10 Gew.-% des Feststoffgemisches mit 90 Gew.-% Talkum verschnitten, wobei 10 %-ige Suspensionen pH-Werte von 6,5, 8,0 und 9,0 aufweisen.
*) Rapid-Netzer, Chemie Linz AG, Erzeuger BASF, Amtl. Pfl. Reg. Nr. 831

**Beispiel 2:**

60 % Gew. Magnesiumacetat          28 % Gew. Calciumacetat
10 % Gew. Kaliumacetat             2 % Gew. Na-EDTA

Spurenelementzusätze wie bei Beispiel 1; Varianten a) - d) analog Beispiel a) - d)

**Beispiel 3:**

90 % Gew. Magnesiumacetat          6 % Gew. Calciumacetat
2 % Gew. Kaliumacetat              2 % Gew. Na-EDTA

Spurenelementzusätze wie bei Beispiel 1; Varianten a) - d) analog Beispiel 1 a) - d).

**Beispiel 4:**

Durch Umsetzung von gebranntem Dolomit mit verdünnter Essigsäure (1 : 1) im stöchiometrischen Ansatz wird Calcium-Magnesiumacetat erhalten. Hiefür wird z. B. Essigsäure, verdünnt mit Wasser im Verhältnis 1 : 1, 150 ml vorgelegt, 30 g gebrannter Dolomit hinzugefügt, die entstehende dick flüssige zähe Masse wird bei 120°C zur Trockene gebracht, wobei die nicht ausreagierte Essigsäure entfernt wird. Das pulverisierte Produkt wird in Wasser gelöst und nochmals zur Trockene im Vakuum eingedampft. Von diesem festen Produkt, charakterisiert durch einen Gehalt von ca. 8,0 % Gew. Mg, 13,4 % Gew. Ca und 77,8 % Gew. Acetat, werden 88 % Gew. mit 10 % Gew. Kaliumacetat unter Beigabe von 2 % Gew. Na-EDTA vermischt und ein Spurenelementzusatz gemäß Beispiel 1 hinzugefügt.

Die Varianten a) - d) wurden analog Beispiel 1 a) - d) gewählt.

**Beispiel 5 :**

Durch Umsetzung von teilgebranntem Spezialdolomitkalk mit Essigsäure analog Beispiel 4 wird ein Calcium-Magnesiumacetat mit einem etwas höheren Calciumgehalt erhalten und zwar 13,9 % Ca, 7,7 % Mg und 77,4 % Acetat. Von dem festen Produkt werden 88 % Gew. mit 10 % Gew. Kaliumacetat und 2 % Gew. Na-EDTA vermischt, sowie die Spurenelemente gemäß Beispiel 1 hinzugefügt.

**Tabelle 1**

| Nr. | Beispiel | Konz.d.wärigen Lösung bzw. Suspension in % | pH-Wert | Zusätze f.d. pH-Einstellung in Vol. bzw. Gew.-% +) | | | |
|---|---|---|---|---|---|---|---|
| | | | | saure Komp. | | alkal.Komp. | |
| | | | | Essigsr. | Salpetersr. | CaO | MgO |
| 1 | 1a | 10 | 6,5 | - | - | - | - |
| 2 | 1a | 1 | 7,2 | - | - | - | - |
| 3 | 1a | 0,1 | 7,9 | - | - | - | - |
| 4 | 1a | fest | - | - | - | - | - |
| 5 | 1a | 10 | 6,5 | - | - | - | - |
| 6 | 1a | 10 | 8 | - | - | 0,091 | 0,90 |
| 7 | 1a | 10 | 9,0 | - | - | 0,227 | 1,39 |
| 8 | 1a | 1 | 6,5 | 0,03 | 0,03 | - | - |
| 9 | 1a | 1 | 8 | - | - | 0,005 | 0,032 |
| 10 | 1a | 1 | 9,0 | - | - | 0,026 | 0,13 |
| 11 | 1a | 0,1 | 6,5 | 0,05 | 0,05 | - | - |
| 12 | 1a | 0,1 | 8 | - | - | 0,002 | 0,021 |
| 13 | 1a | 0,1 | 9,0 | - | - | 0,006 | 0,098 |
| 14 | 1b | fest + CaCO$_3$ | - | - | - | - | - |
| 15 | 1b | fest + MgCO$_3$ | - | - | - | - | - |
| 16 | 1c | 10 + CaCO$_3$ | 6,5 | - | - | - | - |
| 17 | 1c | 1 + CaCO$_3$ | 6,9 | - | - | - | - |
| 18 | 1c | 10 + MgCO$_3$ | 7,8 | - | - | - | - |
| 19 | 1c | 1 + MgCO$_3$ | 8.0 | - | - | - | - |
| 20 | 1d | 10 | 6,5 | 0,03 | 0,03 | - | - |
| 21 | 1d | 10 | 8 | - | - | 0,002 | 0,02 |
| 22 | 1d | 10 | 9,0 | - | - | 0,015 | 0,07 |
| 23 | 2a | 10 | 6,5 | - | - | - | - |
| 24 | 2a | 1 | 7,3 | - | - | - | - |
| 25 | 2a | 0,1 | 7,8 | - | - | - | - |
| 26 | 2a | fest | - | - | - | - | - |
| 27 | 2a | 10 | 6,5 | - | - | - | - |
| 28 | 2a | 10 | 8 | - | - | 0,045 | 0,28 |
| 29 | 2a | 10 | 9,0 | - | - | 0,121 | 4,94 |
| 30 | 2a | 1 | 6,5 | 0,03 | 0,03 | - | - |
| 31 | 2a | 1 | 8 | - | - | 0,004 | 0,098 |
| 32 | 2a | 1 | 9,0 | - | - | 0,021 | 0,652 |
| 33 | 2a | 0,1 | 6,5 | 0,04 | 0,04 | - | - |
| 34 | 2a | 0,1 | 8 | - | - | 0,001 | 0,032 |
| 35 | 2a | 0,1 | 9,0 | - | - | 0,004 | 0,238 |
| 36 | 2b | fest + CaCO | - | - | - | - | - |
| 37 | 2b | fest + MgCO$_3$ | - | - | - | - | - |
| 38 | 2c | 10 + CaCO$_3$ | 6,8 | - | - | - | - |
| 39 | 2c | 1 + CaCO$_3$ | 7 | - | - | - | - |
| 40 | 2c | 10 + MgCO$_3$ | 7,1 | - | - | - | - |
| 41 | 2c | 1 + MBCO$_3$ | 7,3 | - | - | - | - |
| 42 | 2d | 10 | 6,5 | 0,01 | 0,01 | - | - |
| 43 | 2d | 10 | 8 | - | - | 0,004 | 0,074 |
| 44 | 2d | 10 | 9,0 | - | - | 0.034 | 0,56 |
| 45 | 3a | 10 | 6,8 | - | - | - | - |
| 46 | 3a | 1 | 7,4 | - | - | - | - |
| 47 | 3a | 0,1 | 8 | - | - | - | - |
| 48 | 3a | fest | - | - | - | - | - |
| 49 | 3a | 10 | 6,5 | 0,02 | 0,02 | - | - |

| | | | | | | | |
|---|---|---|---|---|---|---|---|
| 50 | 3a | 10 | 8 | - | - | 0,121 | 0,21 |
| 51 | 3a | 10 | 9 | - | - | 0,151 | 5,24 |
| 52 | 3a | 1 | 6,5 | 0,03 | 0,03 | - | - |
| 53 | 3a | 1 | 8 | - | - | 0,005 | 0,11 |
| 54 | 3a | 1 | 9 | - | - | 0,030 | 0,84 |
| 55 | 3a | 0,1 | 6,5 | 0,05 | 0,05 | - | - |
| 56 | 3a | 0,1 | 8 | - | - | - | - |
| 57 | 3a | 0,1 | 9 | - | - | 0,001 | 0,07 |
| 58 | 3b | fest + $CaCO_3$ | - | - | - | - | - |
| 59 | 3b | fest + $MgCO_3$ | - | - | - | - | - |
| 60 | 3c | 10 + $CaCO_3$ | 7 | - | - | - | - |
| 61 | 3c | 1 + $CaCO_3$ | 7,5 | - | - | - | - |
| 62 | 3c | 10 + $MgCO_3$ | 7,5 | - | - | - | - |
| 63 | 3c | 1 + $MgCO_3$ | 8 | - | - | - | - |
| 64 | 3d | 10 | 6,5 | 0,01 | 0,01 | - | - |
| 65 | 3d | 10 | 8 | - | - | 0,004 | 0,09 |
| 66 | 3d | 10 | 9,0 | - | - | 0,033 | 0,57 |
| 67 | 4a | 10 | 6,8 | - | - | - | - |
| 68 | 4a | 1 | 7,2 | - | - | - | - |
| 69 | 4a | 0,1 | 7,5 | - | - | - | - |
| 70 | 4a | fest | - | - | - | - | - |
| 71 | 4a | 10 | 6,5 | 0,06 | 0,06 | - | - |
| 72 | 4a | 10 | 8 | - | - | 0,061 | 0,35 |
| 73 | 4a | 10 | 9,0 | - | - | 0,091 | 0,98 |
| 74 | 4a | 1 | 6,5 | 0,02 | 0,02 | - | - |
| 75 | 4a | 1 | 8 | - | - | 0,003 | 0,22 |
| 76 | 4a | 1 | 9 | - | - | 0,02 | 0,96 |
| 77 | 4a | 0,1 | 6,5 | 0,01 | 0,01 | - | - |
| 78 | 4a | 0,1 | 8 | - | - | 0,001 | 0,11 |
| 79 | 4a | 0,1 | 9 | - | - | 0,002 | 0,21 |
| 80 | 4b | fest + $CaCO_3$ | - | - | - | - | - |
| 81 | 4b | fest + $MgCO_3$ | - | - | - | - | - |
| 82 | 4c | 10 + $CaCO_3$ | 6,8 | - | - | - | - |
| 83 | 4c | 1 + $CaCO_3$ | 7,5 | - | - | - | - |
| 84 | 4c | 10 + $MgCO_3$ | 7,8 | - | - | - | - |
| 85 | 4c | 1 + $MgCO_3$ | 8,2 | - | - | - | - |
| 86 | 4d | 10 | 6,5 | 0,01 | 0,01 | - | - |
| 87 | 4d | 10 | 8 | - | - | 0,003 | 0,21 |
| 88 | 4d | 10 | 9 | - | - | 0,022 | 0,79 |
| 89 | 5a | 10 | 7,2 | - | - | - | - |
| 90 | 5a | 1 | 7,4 | - | - | - | - |
| 91 | 5a | 0,1 | 7,8 | - | - | - | - |
| 92 | 5a | fest | - | - | - | - | - |
| 93 | 5a | 10 | 6,5 | 0,05 | 0,05 | - | - |
| 94 | 5a | 10 | 8 | - | - | 0,045 | 0,32 |
| 95 | 5a | 10 | 9 | - | - | 0,055 | 1,02 |
| 96 | 5a | 1 | 6,5 | 0,02 | 0,02 | - | - |
| 97 | 5a | 1 | 8 | - | - | 0,003 | 0,252 |
| 98 | 5a | 1 | 9 | - | - | 0,015 | 0,924 |
| 99 | 5a | 0,1 | 6,5 | 0,01 | 0,01 | - | - |
| 100 | 5a | 0,1 | 8 | - | - | 0,01 | 0,112 |
| 101 | 5a | 0,1 | 9 | - | - | 0,02 | 0,252 |
| 102 | 5b | fest + $CaCO_3$ | - | - | - | - | - |
| 103 | 5b | fest + $MgCO_3$ | - | - | - | - | - |
| 104 | 5c | 10 + $CaCO_3$ | 7 | - | - | - | - |
| 105 | 5c | 1 + $CaCO_3$ | 7,5 | - | - | - | - |
| 106 | 5c | 10 + $MgCO_3$ | 8 | - | - | - | - |
| 107 | 5c | 1 + $MgCO_3$ | 8,1 | - | - | - | - |
| 108 | 5d | 10 | 6,5 | 0,01 | 0,01 | - | - |
| 109 | 5d | 10 | 8 | - | - | 0,005 | 0,11 |
| 110 | 5d | 10 | 9 | - | - | 0,022 | 0,28 |

+) Bei den flüssigen Formulierungen wurde der PH-Wert direkt durch Zugabe der entsprechenden Zusätze eingestellt, wobei für letztere in flüssiger Form (Essigsäure, Salpetersäure) die Angabe in Vol.-%, in fester Form dagegen (CaO u. MgO) in Gew.-% erfolgte; handelte es sich bei obigen Formulierungen um Suspensionen (z. B. bei pH 8 und 9) so wurde ein Dispergiermittel, in diesem Fall ligninsulfonsaures Natrium in den üblichen Mengen beigefügt; zwecks Einstellung der verschiedenen gewünschten pH-Werte können die angeführten Zusätze (feste beigemischt, flüssige aufgesprüht) auch direkt in feste Formulierungen eingebracht werden.

Im Hinblick auf Simulationsversuche mit dem "sauren Regen" wurde unter Berücksichtigung von Literaurangaben bzw. diversen Hinweisen folgende Modellösung hergestellt, die eine erheblich größere Menge an Schwefel- bzw. Salpetersäure enthielt als in der Praxis gemessen wurde (ca. 2 - 10fach an $H_2SO_4$ und ca. 4 - 7fach an $HNO_3$): ca. 50 ppm $SO_4^{2-}$; ca. 20 ppm $NO_3$ hergestellt aus 10,6 ml 1n $H_2SO_4$ und 3,3 ml 1n $HNO_3$ ad 1 000 ml mit Wasser 1 : 10 verdünnt, wobei die Einstellung auf pH 4,0 mittels $KHCO_3$ erfolgte.

Die nachfolgende Tabelle gibt einen Überblick bezüglich der notwendigen Mengen an "saurem Regen", die zu den diversen Formulierungen zur Einstellung der pH-Werte 5,5, 6,5 und 7,5 hinzugefügt werden müssen, wodurch eine gute Abschätzung der Pufferkapazität, sowie der Aufwandsmenge, der Applikationsform und Applikationstechnik in der Praxis möglich ist.

**Tabelle 2**

Zudosierungen von ml "saure Regen" pro ml flüssiger Formulierung
(Lösung bzw. Suspension) bzw. bei festen Formulierungen in
g Produkt pro 100 ml "saurer" Regen zur Erzielung von

| Nr. | pH 5,5 | pH 6,5 | pH 7,5 | Ausgangs-pH-Wert |
|---|---|---|---|---|
| 1 | 730 | - | - | 6,5 |
| 2 | 445 | 25 | - | 7,2 |
| 3 | 65 | 8 | - | 7,9 |
| 4 | 0,04 | 0,45 | - | 4 |
| 5 | 720 | - | - | 6,5 |
| 6 | 1050 | 30 | 5 | 8 |
| 7 | 1550 | 150 | 12 | 9 |
| 8 | 200 | - | - | 6,5 |
| 9 | 210 | 12 | 5 | 8 |
| 10 | 225 | 12 | 5 | 9 |
| 11 | 33 | - | - | 6,5 |
| 12 | 35 | 3 | 1 | 8 |
| 13 | 40 | 4 | 1,5 | 9 |
| 14 | 0,06 | 0,44 | - | 4 |
| 15 | 0,06 | 0,58 | - | 4 |
| 16 | 1450 | - | - | 6,5 |
| 17 | 190 | 11 | - | 6,9 |
| 18 | 1000 | 55 | 9 | 7,8 |
| 19 | 220 | 15 | 3 | 8,0 |
| 20 | 150 | - | - | 6,5 |
| 21 | 215 | 15 | 3 | 8 |
| 22 | 230 | 12 | 2 | 9 |
| 23 | 1450 | - | - | 6,5 |
| 24 | 200 | 11 | - | 7,3 |
| 25 | 50 | 8 | 1 | 7,8 |
| 26 | 0,02 | 0,23 | - | 4 |
| 27 | 1450 | - | - | 6,5 |
| 28 | 1550 | 90 | 3 | 8 |
| 29 | 1750 | 180 | 23 | 9 |
| 30 | 170 | - | - | 6,5 |
| 31 | 180 | 10 | 2 | 8 |
| 32 | 230 | 25 | 7 | 9 |
| 33 | 28 | - | - | 6,5 |
| 34 | 47 | 10 | 2 | 8 |
| 35 | 60 | 12 | 5 | 9 |
| 36 | 0,02 | 0,27 | - | 4 |
| 37 | 0,03 | 0,30 | - | 4 |
| 38 | 1100 | 50 | - | 6,8 |
| 39 | 200 | 16 | - | 7 |
| 40 | 1050 | 45 | - | 7,1 |
| 41 | 180 | 12 | - | 7,3 |

6

| | | | |
|---|---|---|---|
| 42 | 170 | - | - | 6,5 |
| 43 | 190 | 12 | 2 | 8 |
| 44 | 200 | 25 | 3 | 9 |
| 45 | 2200 | 70 | - | 6,8 |
| 46 | 280 | 19 | - | 7,4 |
| 47 | 60 | 11 | 3 | 8 |
| 48 | 0,05 | 0,40 | - | 4 |
| 49 | 1650 | - | - | 6,5 |
| 50 | 2700 | 115 | 5 | 8 |
| 51 | 2900 | 120 | 11 | 9 |
| 52 | 400 | - | - | 6,5 |
| 53 | 550 | 10 | 3 | 8 |
| 54 | 650 | 17 | 4 | 9 |
| 55 | 50 | - | - | 6,5 |
| 56 | 65 | 14 | 2 | 8 |
| 57 | 80 | 15 | 4 | 9 |
| 58 | 0,07 | 0,49 | - | 4 |
| 59 | 0,06 | 0,55 | - | 4 |
| 60 | 1900160 | - | - | 7 |
| 61 | 290 | 15 | - | 7,5 |
| 62 | 1750 | 145 | - | 7,5 |
| 63 | 260 | 21 | 7 | 8 |
| 64 | 190 | - | - | 6,5 |
| 65 | 220 | 17 | 3 | 8 |
| 66 | 260 | 29 | 4 | 9 |
| 67 | 1500 | 220 | - | 6,8 |
| 68 | 210 | 18 | - | 7,2 |
| 69 | 40 | 9 | - | 7,5 |
| 70 | 0,02 | - | - | 4 |
| 71 | 1350 | - | - | 6,5 |
| 72 | 2800 | 60 | 2 | 8 |
| 73 | 2900 | 195 | 13 | 9 |
| 74 | 350 | - | - | 6,5 |
| 75 | 400 | 14 | 2 | 8 |
| 76 | 500 | 17 | 2 | 9 |
| 77 | 53 | - | - | 6,5 |
| 78 | 65 | 10 | 1 | 8 |
| 79 | 120 | 10 | 3 | 9 |
| 80 | 0,02 | - | - | 4 |
| 81 | 0,02 | - | - | 4 |
| 82 | 1800 | 150 | - | 6,8 |
| 83 | 240 | 25 | - | 7,5 |
| 84 | 1700 | 80 | 13 | 7,8 |
| 85 | 200 | 15 | 4 | 8,2 |
| 86 | 190 | - | - | 6,5 |
| 87 | 240 | 13 | 1 | 8 |
| 88 | 380 | 29 | 5 | 9 |
| 89 | 1880 | 105 | - | 7,2 |
| 90 | 270 | 17 | - | 7,4 |
| 91 | 60 | 7 | 1 | 7,8 |
| 92 | 0,02 | 0,34 | - | 4 |
| 93 | 1600 | - | - | 6,5 |
| 94 | 2400 | 125 | 7 | 8 |
| 95 | 2750 | 185 | 14 | 9 |
| 96 | 200 | - | - | 6,5 |
| 97 | 400 | 23 | 2 | 8 |
| 98 | 430 | 29 | 3 | 9 |
| 99 | 40 | - | - | 6,5 |
| 100 | 60 | 7 | 2 | 8 |
| 101 | 70 | 9 | 3 | 9 |
| 102 | 0,02 | 0,36 | - | 4 |
| 103 | 0,02 | 0,36 | - | 4 |
| 104 | 1500 | 50 | - | 7 |
| 105 | 230 | 28 | - | 7,5 |
| 106 | 1800 | 140 | 7 | 8 |

| 107 | 250 | 18 | 3 | 8,1 |
|-----|-----|-----|-----|-----|
| 108 | 270 | - | - | 6,5 |
| 109 | 370 | 25 | 5 | 8 |
| 110 | 390 | 30 | 6 | 9 |

Im folgenden soll nun bei ausgewählten Formulierungen die präventive und kurative Wirksamkeit gegen "Sauren Regen" an jungen Nadelbäumchen demonstriert werden. Berücksichtigt man, daß wie bekannt (vgl. W. Frohner Seite 128 ff, Technik der Blattdüngung im Handbuch der Pflanzenernährung und Düngung Bd. III, Springer Verlag 1968) das Aufsprühen einer Brühenmenge von 150 - 200 l/ha eine nahezu vollständige Benetzung der Blattfläche gewährleistet - darüberhinausgehende Brühenmengen würden wie ebenfalls aus der Literatur (vgl. d. zitierte Literaturstelle) bekannt, zu Verlusten durch Abtropfen bzw. "Verwehen" schon durch leichten Wind führen - ergibt sich die jeweilige Aufwandsmenge aus den jeweils eingesetzten Konzentrationen.

**Anwendungsbeispiel A:**

Mehrere Jungfichten (Picea abies (L.) KARSTEN) wurden auf magnesium- und kalkarmen Boden mit oben beschriebenem simuliertem "saurem Regen" 3x pro Woche im Frühjahr besprüht, bis die ersten Anzeichen einer Schädigung auftraten. Unmittelbar danach wurden diese Fichten:

a) unbehandelt belassen,

b) mit Nitrophoska in den üblichen Mengen gedüngt,

c) mit Nr. 2, 4 (2 %-ig, pH 7,5) 9, 17, 24, 31, 46, 48 (2 %-ig, pH 6,5), 53, 63, 68, 90, 97 und 105, 2x pro Woche 2 bis 3 Wochen hindurch die Nadeln tropfnaß besprüht, bis die ersten Anzeichen einer Besserung auftraten (berechnete Aufwandmengen: 6 bis 24 kg/ha Wirkstoff),

d) mit Nr. 3, 4 (0,5 %-ig, pH 7,5), 12, 25, 34, 39, 47, 48 (0,5 %-ig, pH 7), 55, 61, 69 und 78 3x pro Woche 4 bis 5 Wochen hindurch die Nadeln tropfnaß besprüht bis zum Auftreten der ersten Anzeichen einer Besserung (berechnete Aufwandmengen: 1,8 bis 15 kg/ha Wirkstoff),

e) mit Nr. 20, 43, 66 und 109 die Nadeln in feuchtem Zustand bis zum Auftreten von Besserungssymptomen bestäubt (insgesamt ca. 8 g/m² zweimal im Abstand von ca. 4 Wochen) (berechnete Aufwandmengen: 8 kg/ha Wirkstoff),

f) mit Nr. 4 (30 g, 10 %-ige Lösung pH 8), 14 (30 g), 48 (20 g, 10 %-ige Lösung pH 6,5), 59 (20 g) und 80 (20 g) der unmittelbare Bodenbereich (ca. 0,5 m²) einmal behandelt (berechnete Aufwandmengen: 400 bis 600 kg/ha Wirkstoff) für den Fall, daß nach 4 Wochen keine Besserung auftrat, wurde analog nachbehandelt (berechnete Aufwandmengen: 800 bis 1200 kg/ha Wirkstoff),

g) mit Nr. 1, 4 (5 %-ige Lösung, pH 8), 5, 16, 27, 45, 48 (5 %-ige Lösung pH 9), 50, 62, 67, 84, 89, 92 (5 %-ige Lösung, pH 6,5) wurde der Bodenbereich (ca. 0,5 m²) so lange zweimal innerhalb von ca. 4 Wochen mit insgesamt ca. 100 ml der jeweiligen Formulierungen behandelt (berechnete Aufwandmengen: 100 bis 200 kg/ha Wirkstoff), bis die ersten Besserungssymptome erkennbar waren.

Nach ca. 3 Monaten wurde die endgültige Bewertung der Fichten nach obigen Behandlungsparametern vorgenommen. Dabei konnte bei den unbehandelten Fichten im Bereich der Kronentraufen ein totaler Abfall der Nadeln, sowie eine Vergilbung bzw. Braunfärbung der Nadeln im basipetalen Bereich festgestellt werden. Alle diese Schadenssymptome traten, wenn auch etwas vermindert (z. B. geringerer Nadelausfall, nur vereinzelt Braunfärbung der Nadeln) bei der Düngung mit Nitrophoska auf. Hingegen zeigten die mit c), f und g) behandelten Fichten praktisch keine Schäden, die mit d) und e) behandelten Fichten ließen ebenfalls nur vereinzelt geringe Vergilbungen, aber keine Schäden der Nadeln im Basisbereich erkennen, die aber nach weiteren 2 Monaten kaum mehr feststellbar waren.

**Anwendungsbeispiel B:**

Mehrere Jungfichten der gleichen Species, wie im Beispiel A wurden auf magnesium- und kalkarmen Boden im Frühjahr wie folgt mit den nachstehenden Formulierungen behandelt und anschließend so lange mit dem beschriebenen simulierten "sauren Regen" besprüht, bis bei den unbehandelten Kontrollen die ersten Schadenssymptome auftraten:

a) unbehandelt belassen,

b) mit Nitrophoska in den üblichen Mengen gedüngt,

c) mit Nr. 10, 24, 26 (2 %-ig, PH 8), 32, 46, 54, 70 (2 %-ig, pH 7,5) 76, 90, 98, 2x pro Woche, 1 Woche hindurch die Nadeln tropfnaß besprüht (berechnete Aufwandmengen: 3 bis 8 kg/ha Wirkstoff) und danach 3 Tage später mit der Behandlung mit dem "sauren Regen" begonnen,

d) mit Nr. 3, 13, 19, 35, 41, 47, 57, 61, 69, 79, 85, 101 und 105 3 x pro Woche, 2 Wochen hindurch die Nadeln tropfnaß besprüht (berechnete Aufwandmengen: 0,9 bis 12 kg/ha Wirkstoff) und danach 3 Tage später mit der Behandlung mit dem "sauren Regen" begonnen,

e) mit Nr. 22, 44, 66, 88 und 110 die Nadeln im feuchten Zustand weitestgehend vollständig bestäubt (berechnete Aufwandmengen: 7 bis 10 kg/ha Wirkstoff) und 1 Tag später mit der Behandlung mit dem "sauren Regen" begonnen,

f) Nr. 4 (30 g, 10 %-ige Lösung pH 8), 15 (30 g), 26 (30 g, 10 %-ige Lösung pH 7), 48 (30 g, 10 %-ige Lösung pH 6,5),59 (30 g) und 102 (30 g) wurden in den Bodenbereich leicht eingearbeitet (berechnete Aufwandmengen: 600 kg/ha Wirkstoff) und 1 Tag später mit der Behandlung mit dem sauren Regen begonnen,

g) mit Nr. 1, 6, 7, 18, 29, 38, 45, 49, 51, 62, 71, 82 und 89 wurde der Bodenbereich (ca. 0,5 $m^2$ 2x pro Woche, 2 Wohen hindurch mit insgesamt ca. 100 ml der jeweiligen Formulierungen behandelt (berechnete Aufwandmengen: 200 kg/ha Wirkstoff) und danach 3 Tage später mit der Applikation des "sauren Regen" begonnen.

Nach ca. 2,5 Monaten wurde die Bewertung im Vergleich zu den unbehandelten Kontrollen vorgenommen, wobei folgende Resultate erhalten wurden:

Bei Fichten nach Behandlung gemäß a) und b) wurden erwartungsgemäß die bereits unter A) beschriebenen Schadenssymptome festgestellt.

Hingegen wurden diese kaum bis nur sehr vereinzelt bei Behandlung nach c) und d) beobachtet.

Geringe Schadenssymptome waren bei e) bereits etwas stärker ausgeprägt bei f) und g) zu erkennen, allerdings deutlich gemildert im Vergleich zu a) und b).

## Anwendungsbeispiel C:

Mehrere Jung-Tannen (Abies alba Mill) wurden auf magnesium- und kalkarmen Boden im Frühjahr mit dem angeführten simulierten "sauren Regen" 3x pro Woche besprüht, bis die ersten Anzeichen einer Schädigung auftraten. Unmittelbar darauf wurden diese Tannen wie folgt behandelt:

a) unbehandelt belassen,

b) mit Nitrophoska in den üblichen Mengen gedüngt,

c) mit Nr. 2, 4 (1,5 %-ig, PH 8), 8, 19, 24, 41, 46, 52, 61, 68, 75 und 85 2x pro Woche 2 bis 3 Wochen hindurch die Nadeln tropfnaß besprüht (berechnete Aufwandmengen: 6 bis 18 kg/ha Wirkstoff), bis die ersten Anzeichen einer Besserung auftraten,

d) mit Nr. 3, 4 (0,3 %-ig, pH 7), 11, 25, 34, 56, 69 und 100, 3x pro Woche 4 bis 5 Wochen hindurch die Nadeln tropfnaß besprüht (berechnete Aufwandmengen: 1,8 bis 9 kg/ha Wirkstoff), bis zum Auftreten der ersten Anzeichen einer Besserung,

e) mit Nr. 21, 42, 65 und 86 die Nadeln in feuchtem Zustand bis zum Auftreten von Besserungssymptomen bestäubt (insgesamt ca. 8g/$m^2$ zweimal im Abstand von ca. 4 Wochen) (berechnete Aufwandmengen: ca. 8 kg/ha Wirkstoff)

f) mit Nr. 4 (25 g, 10 %-ige Lösung pH 7), 15 (25 g), 36 (20 g), 48 (20 g, 10 %-ige Lösung pH 7,5), 58 (20 g) und 103 (20 g) der unmittelbare Bodenbereich (ca. 0,5 $m^2$) einmal behandelt (berechnete Aufwandmengen: 400 bis 500 kg/ha Wirkstoff); für den Fall, daß nach ca. 3 - 4 Wochen keine Besserung auftrat, wurde analog nachbehandelt (berechnete Aufwandmengen: 800 bis 1000 kg/ha Wirkstoff),

g) mit Nr. 1, 4 (8 %-ige Lösung, pH 6,5), 6, 23, 28, 45, 48 (6 %-ige Lösung pH 7), 51, 62, 67, 72, 82, 89 und 95 wurde der Bodenbereich (ca. 0,5 $m^2$) so lange (zweimal innerhalb von ca. 4 Wochen mit insgesamt ca. 100 ml der jeweiligen Formulierungen) behandelt (berechnete Aufwandmengen: 120 bis 200 kg/ha Wirkstoff), bis die ersten Besserungssymptome erkennbar waren.

Nach ca. 3 Monaten wurde eine endgültige Bewertung der Tannen nach obigem Applikationsverfahren vorgenommen.

Dabei konnte bei den unbehandelten Tannen ein totaler Nadelausfall, der nur etwas geringfügig reduziert auch bei den mit Nitrophoska gedüngten Bäumchen auftrat, beobachtet werden.

Dagegen zeigten die mit c), d) und g) behandelten Tannen nahezu keinen Nadelausfall und einen gesunden Status, die mit e) und f) behandelten Tannen ließen ebenfalls nur vereinzelt auftretende Schadenssymptome erkennen, die nach ca. 2 weiteren Monaten gleichfalls weitgehend verschwunden waren.

## Anwendungsbeispiel D:

Mehrere Jung-Tannen der gleichen Species wie im Beispiel C wurden auf magnesium- und kalkarmen Boden im Frühjahr mit den nachstehenden Formulierungen behandelt und anschließend solange mit dem angeführten "sauren Regen" besprüht, bis bei den unbehandelten Kontrollen die ersten Schadenssymptome auftraten:

a) unbehandelt belassen,

b) mit Nitrophoska in den üblichen Mengen gedüngt,

c) mit Nr. 2, 9, 19, 24, 30, 39, 46, 48 (1,5 %, 10 %-ige Lösung pH 8), 53, 63, 90, 92 (2 %-ig, 10 %-ige Lösung pH 7) und 97, 2x pro Woche, 1 Woche hindurch die Nadeln tropfnaß besprüht (berechnete Aufwandmengen: 3 bis 8 kg/ha Wirkstoff) und danach 2 Tage später mit der Behandlung mit dem "sauren Regen" begonnen,

d) mit Nr. 3, 12, 33, 47, 57, 78, 91, 99 und 107 3x pro Woche, 2 Wochen hindurch die Nadeln tropfnaß gespritzt (berechnete Aufwandmengen: 0,9 bis 12 kg/ha Wirkstoff) und danach 2 Tage später die Behandlung mit dem "sauren Regen" begonnen,

e) mit Nr. 21, 64, 87 und 108 die Nadeln in feuchtem Zustand weitestgehend vollständig bestäubt (berechnete Aufwandmengen: 6 bis 9 kg/ha Wirkstoff) und 1 Tag später mit der Behandlung mit dem "sauren Regen" begonnen,

f) Nr. 14 (25g), 26 (25g, 10 %-ige Lösung pH 7,5), 37 (25 g), 48 (25 g, 10 %-ige Lösung pH 6,5), 59 (25 g), 81 (25 g) und 103 (25 g) (berechnete Aufwandmengen 500 kg/ha Wirkstoff) wurden in den Bodenbereich leicht eingearbeitet und 1 Tag später mit der Behandlung mit dem "sauren Regen" begonnen,

g) mit Nr. 1, 7, 28, 45, 50, 60, 67, 72, 95 und 106 wurde der Bodenbereich (ca. 0,5 %) 2x pro Woche, 2 Wochen hindurch mit insgesamt ca. 80 ml der jeweiligen Formulierungen behandelt (berechnete Aufwandmengen: ca. 160 kg/ha Wirkstoff) und danach 2 Tage später mit der Applikation des "sauren Regen" begonnen.

Nach ca. 3 Monaten wurde die Bewertung im Vergleich zu den unbehandelten Kontrollen vorgenommen, wobei folgende Resultate erhalten wurden:

Bei Tannen nach Behandlung gemäß a) und b) wurden erwartungsgemäß analoge Schadensbilder wie unter c) beschrieben, erhalten.

Dagegen wurden solche kaum oder nur in sehr untergeordnetem Ausmaß bei der Applikation von c), d) und f) beobachtet. Geringe Schäden waren bei e), bereits etwas stärker ausgeprägt bei g) zu erkennen, allerdings erheblich gemildert im Vergleich zu a) und b).


**Anwendungsbeispiel E:**

Mehrere Jung-Schwarzkiefern (Pinus nigra ARNOLD) wurden auf magnesium- und kalkarmen Boden im Frühjahr mit den nachstehenden Formulierungen behandelt und anschließend mit dem beschriebenen simulierten "sauren Regen" so lange besprüht, bis bei den unbehandelten Kontrollen die ersten Schadenssymptome auftraten:

a) unbehandelt belassen,

b) mit Nitrophoska in den üblichen Mengen gedüngt,

c) mit Nr. 2, 4 (2 %-ig, pH 7), 9, 17, 30, 46, 53, 74, 90 und 96 2x pro Woche 1 bis 2 Wochen hindurch die Nadeln tropfnaß besprüht (berechnete Aufwandmengen:
3 bis 16 kg/ha Wirkstoff), bis die ersten Anzeichen einer Besserung auftraten,

d) mit Nr. 4 (0,6 %-ig, pH 6,5), 12, 25, 35, 47, 57 und 77, 3x pro Woche 3 bis 4 Wochen hindurch die Nadeln tropfnaß besprüht (berechnete Aufwandmengen:
1,35 bis 14,4 kg/ha Wirkstoff), bis zum Auftreten der ersten Anzeichen einer Besserung,

e) mit Nr. 21, 42, 66 und 109 die Nadeln in feuchtem Zustand bis zum Auftreten von Besserungssymptomen bestäubt (insgesamt ca. 6 g/m$^2$ im Abstand von ca. 4 Wochen) (berechnete Aufwandmengen: ca. 6 kg/ha Wirkstoff),

f) Nr. 14 (25g), 37 (25g), 48 (25 g, 10 %-ige Lösung pH 6,5) und 102 (25 g), der unmittelbare Bodenbereich (ca. 0,5 m$^2$) einmal behandelt (berechnete Aufwandmengen: 500 kg/ha Wirkstoff); für den Fall, daß nach ca. 3 Wochen keine Besserung auftrat (berechnete Aufwandmengen: 1000 kg/ha Wirkstoff); wurde analog nachbehandelt,

g) mit Nr. 1, 7, 38, 45, 51, 62, 67, 73, 93 und 106 wurde der Bodenbereich (ca. 0,5 m$^2$) so lange (2x pro Woche, 2 Wochen hindurch mit insgesamt ca. 80 ml) behandelt (berechnete Aufwandmengen: ca. 160 kg/ha Wirkstoff), bis die ersten Besserungssymptome erkennbar waren.

Nach 2,5 Monaten wurde eine endgültige Bewertung der Kiefern nach obigen Applikationsverfahren vorgenommen.

Dabei konnte bei den unbehandelten und mit Nitrophoska gedüngten Kiefern ein Nadelausfall, sowie gelbe und teilweise auch braune Nadeln beobachtet werden, hingegen bei den mit c), f) und g) behandelten Bäumchen ein gesunder Status festgestellt werden. Bei den Behandlungsarten nach d) und e) waren dagegen zum Teil Schadenssymptome (nach ca. 2 weiteren Monaten erheblich reduziert) vorhanden, aber in wesentlich geringerem Ausmaß als bei a) und b).


**Anwendungsbeispiel F:**

Mehrere Jung-Schwarzkiefern der gleichen Species wie in Beispiel E wurden auf magnesium- und kalkarmen Boden im Frühjahr mit den nachstehenden Formulierungen behandelt und anschließend so lange mit dem angeführten simulierten "sauren Regen" besprüht, bis bei den unbehandelten Kontrollen die ersten Schadenssymptome auftraten:

a) unbehandelt belassen,

b) mit Nitrophoska in den üblichen Mengen gedüngt,

c) mit Nr. 2, 8, 19, 24, 32, 48 (1,2 %-ige Lösung pH 9), 61, 68 und 98 2x pro Woche, 1 Woche hindurch die Nadeln tropfnaß besprüht (berechnete Aufwandmengen: 3 bis 4,8 kg/ha Wirkstoff) und danach 2 Tage später mit der Behandlung mit dem "sauren Regen" begonnen,

d) mit Nr. 13, 17, 25, 33, 47, 55, 63, 91, 100 und 107 3x pro Woche, 2 Wochen hindurch die Nadeln tropfnaß besprüht (berechnete Aufwandmengen: 0,9 bis 12 kg/ha Wirkstoff) und danach 2 Tage später die Behandlung mit dem "sauren Regen" begonnen,

e) mit Nr. 22, 42, 65 und 86 die Nadeln in feuchtem Zustand weitgehend vollständig bestäubt (berechnete Aufwandmengen: 6 bis 9 kg/ha Wirkstoff) und 1 Tag später mit der Behandlung mit dem "sauren Regen" begonnen,

f) Nr. 4 (25 g, 10 %-ige Lösung pH 6,5), 15 (25 g), 36 (25 g), 58 (25 g), 80 (25 g) und 102 (25 g) wurde in den Bodenbereich leicht eingearbeitet (berechnete Aufwandmengen: 500 kg/ha Wirkstoff) und 1 Tag später mit der Behandlung mit dem "sauren Regen" begonnen.

g) mit Nr. 1, 6, 18, 27, 45, 49, 62, 89, 94 und 104 wurde der Bodenbereich (ca. 0,5 m$^2$) 2x pro Woche, 2 Wochen hindurch mit insgesamt ca. 80 ml der jeweiligen Formulierung behandelt (berechnete Aufwandmengen: ca. 160 kg/ha Wirkstoff) und danach 2 Tage später mit der Applikation des "sauren Regen" begonnen.

Nach ca. 2,5 Monaten wurde die Bewertung im Vergleich zu den unbehandelten Kontrollen vorgenommen, wobei folgende Resultate erhalten wurden:

Erwartungsgemäß wurde bei den Kiefern nach Behandlung gemäß a) und b) ein hoher Nadelausfall, sowie Vergilbungen und braune Nadeln beobachtet. Hingegen konnte bei den Behandlungsparametern c), e) und g) ein gesunder Status, bei d) und f) dagegen leichte, aber großteils reversible Schäden festgestellt werden, die aber im Vergleich zu a) und b) in deutlich vermindertem Ausmaß auftraten.

**Aufwendungsbeispiel G:**

Landwirtschaftlicher Kulturboden wurde im Modellversuch mit simuliertem "saurem Regen" solange ausgewaschen, bis eine deutliche Verarmung an Calcium und Magnesium auftrat.

Danach wurde so behandeltes und unbehandeltes Bodenmaterial in Pflanzschalen gebracht, in welche gleiche Mengen an Saatgut von Raps (Sorte Berlinda) appliziert wurden und in weiterer Folge die Entwicklung der Pflänzchen beobachtet.

Folgende Versuchsvarianten wurden gewählt:

a) Boden unbehandelt
b) Boden behandelt
c) Boden behandelt und mit Nitrophoska in den üblichen Mengen gedüngt
d) Boden vor der Aussaat von Raps prophylaktisch mit einer Brühenmenge von 400 l/ha mit Nr. 1, 7, 28, 29, 38, 45, 50, 60, 62, 67, 72, 93, 95 104 und 106 behandelt (berechnete Aufwandmengen: 40 kg/ha Wirkstoff).
e) Boden vor der Aussaat von Raps prophylaktisch mit Nr. 4 (10 %-ige Lösung pH 8), 14, 26 (10 %-ige Lösung pH 7,5), 37, 58, 80, 92 (10 %-ige Lösung pH 6,5), und 103 behandelt (berechnete Aufwandmengen: 80 kg/ha Wirkstoff).
f) Die auf b) gezogenen Pflänzchen (erheblich in Wachstum und Entwicklung gestört!) wurden 7 Tage nach der Aussaat 2 x innerhalb von 2 Tagen mit Nr. 2, 9, 10, 19, 26 (2 %-ig, pH 8), 30, 32, 39, 52, 53, 68, 70 (2 %-ig, pH 7,5), 74, 85, 97, 98 und 105 tropfnaß besprüht (berechnete Aufwandmengen: 3 bis 8 kg/ha Wirkstoff).
g) Die auf b) gezogenen Pflänzchen (erheblich in Wachstum und Entwicklung gestört!) wurden 7 Tage nach der Aussaat 4 x innerhalb von 4 Tagen mit Nr. 3, 11, 13, 26 (0,5 %-ig, pH 6,5), 34, 35, 56, 70 (0,5 %ig, pH 8), 79, 91, 99 und 100 tropfnaß gesprüht (berechnete Aufwandmengen: 0,6 bis 4 kg/ha Wikstoff).
h) Die auf b) gezogenen Pflänzchen (erheblich in Wachstum und Entwicklung gestört!) wurden 7 Tage nach der Aussaat in feuchtem Zustand weitgehend vollständig mit Nr. 21, 42, 64, 66 und 109 bestäubt (berechnete Aufwandmengen: 6 bis 8 kg/ha Wirkstoff).

Nach ca. 14 Tagen wurde eine Bewertung des Wachstums und der Entwicklung der Rapspflänzchen vorgenommen, wobei erwartungsgemäß bei der Variante b) im Vergleich zu a) erhebliche Wachstums- und Entwicklungsstörungen beobachtet werden konnten. Letztere traten ebenso, wenn auch etwas vermindert, bei der Behandlung nach c), hingegen kaum bzw. überhaupt nicht bei den Versuchsvarianten d) und e) auf.

Auch die Versuche gemäß f, g und h) dokumentieren eine gute kurative Wirkung der gewählten Behandlungsparameter, da im Vergleich zu b) eine deutlich verbesserte Entwicklung sowie Wachstum der Pflänzchen festzustellen war.

**Anwendungsbeispiel H:**

Die Bodenbehandlung erfolgte analog Beispiel G. Behandeltes und unbehandeltes Bodenmaterial wurde in Pflanzschalen gebracht, in welche gleiche Mengen an Saatgut von Gerste (Sorte Rome) appliziert wurden und in weiterer Folge die Entwicklung der Pflänzchen beobachtet wurde. Folgende Versuchsvarianten wurden gewählt:

a) Boden unbehandelt
b) Boden behandelt
c) Boden behandelt und mit Nitrophoska in üblichen Mengen gedüngt.
d) Boden vor der Aussaat von Gerste prophylaktisch mit einer Brühenmenge von 400 l/ha mit Nr. 5, 16, 18, 27, 40, 49, 51, 71, 73, 82, 84, 89, 94 und 104 behandelt (berechnete Aufwandmengen: 40 kg/ha Wirkstoff).
e) Boden vor der Aussaat von Gerste prophylaktisch mit Nr. 15, 36, 48 (10 %-ige Lösung pH 6,5), 59, 70 (10 %-ige Lösung pH 8), 81 und 102 behandelt (berechnete Aufwandmengen: 80 kg/ha Wirkstoff).
f) Die auf b) gezogenen Pflänzchen (in Wachstum und Entwicklung gestört) wurden 7 Tage nach der Aussaat 2x innerhalb von 2 Tagen mit Nr. 4 (2 %-ig, pH 7,5), 8, 17, 24, 31, 41, 46, 48 (2 %-ig, pH 6,5), 54, 61, 63, 75, 76, 83, 90, 92 (2 %-ig, pH 7), 96 und 107 tropfnaß besprüht (berechnete Aufwandmengen: 3 bis 8 kg/ha Wirkstoff).
g) Die auf b) gezogenen Pflänzchen (in Wachstum und Entwicklung gestört) wurden 7 Tage nach der Aussaat 4x innerhalb von 4 Tagen mit Nr. 4 (0,5 %-ig, pH 7,5), 12, 25, 33, 47, 48 (0,5 %-ig, pH 7), 55, 57, 69, 77, 78, 92 (0,5 %-ig, pH

9) und 101 tropfnaß gesprüht (berechnete Aufwandmengen: 0,6 bis 4 kg/ha Wirkstoff).

h) Die auf b) gezogenen Pflänzchen (in Wachstum und Entwicklung gestört) wurden 7 Tage nach der Aussaat in feuchtem Zustand weitgehend vollständig mit Nr. 22, 43, 64, 87, 108 und 110 bestäubt (berechnete Aufwandmengen: 6 bis 8 kg/ha Wirkstoff).

Nach ca. 14 Tagen wurde eine Bewertung des Wachstums und der Entwicklung der Gerstenpflänzchen vorgenommen, wobei erwartungsgemäß bei der Variante b) im Vergleich zu a) deutliche Wachstums- und Entwicklungsstörungen beobachtet werden konnten. Letztere traten ebenso, allerdings gemindert, bei der Behandlung nach c), hingegen nur gering bzw. fast kaum bei den Versuchsvarianten d) und e) auf.

Ebenso dokumentieren die Versuche gemäß f), g), und h) eine gute kurative Wirkung der gewählten Behandlungsparameter da im Vergleich zu b) eine verbesserte Entwicklung sowie Wachstum der Pflänzchen festzustellen war.

## Patentansprüche

1. Schutz- und Bekämpfungsmittel gegen Schäden an der Vegetation beispielsweise an jungen Nadelbäumen, verursacht durch Ernährungsstörungen, insbesondere ausgelöst durch sauren Regen bzw. saure Immissionen auf magnesium- und kalkarmen Böden bzw. bei diesbezüglichen Mangelerscheinungen der Pflanzen in gelöster, suspendierter oder fester Form, enthaltend Calcium- und Magnesiumsalze sowie geringe Mengen wasserlöslicher Kalium-, Eisen- und Manganverbindungen, ferner Stabilisatoren, sowie bei flüssigen Formulierungen bei Applikation im Wege über die Blätter bzw. Nadeln, auch Netzmittel, dadurch gekennzeichnet, daß das Mittel Calcium- und Magnesiumacetat und zusätzlich saure oder alkalische Komponenten in einer solchen Menge enthält, daß eine 0,1 bis 10 %-ige wäßrige Lösung bzw. Suspension mit einem Dispergiermittel einen pH-Wert von mindestens 6,5 und maximal 9,0 aufweist.

2. Mittel nach Anspruch 1, dadurch gekennzeichnet, daß es als saure Komponente niedrige Carbonsäuren bzw. anorganische Säuren, bevorzugt Essigsäure, enthält.

3. Mittel nach Anspruch 1, dadurch gekennzeichnet, daß es als alkalische Komponente Oxide, Hydroxyde und/oder Karbonate von Erdalkalimetallen, bevorzugt von Calcium und/oder Magnesium, enthält.

4. Mittel nach einem der vorhergehenden Ansprüche, dadurch gekennzeichnet, daß es maximal 90 Gew.-%, vorzugsweise 30 bis 60 Gew.-% Magnesiumacetat enthält.

5. Mittel nach Anspruch 1, dadurch gekennzeichnet, daß es zur Erzielung einer sehr feinen und gleichmäßigen Tröpfchengröße einen Zusatz an Formulierungsmitteln auf Basis von Polyoxyäthylenäthern bzw. -estern enthält.

6. Mittel nach Anspruch 1, dadurch gekennzeichnet, daß es für die Applikationen in Pulverform bzw. zum Verstäuben auf Blätter und Nadeln mit inerten Trägersubstanzen verschnitten ist.

## Claims

1. Protective and control agent against damage to vegetation, for example young conifers, caused by nutritional disturbances, triggered in particular by acid rain or acid intromissions on magnesium and lime-poor soils or in the case of apparent plant deficiencies in these respects, in dissolved suspended or solid form containing calcium and magnesium salts as well as small quantities of water-soluble potassium, iron and manganese compounds, together with stabilisers and in the case of liquid formulations also wetting agents when these are applied via the leaves or needles, characterised in that the agent contains calcium and magnesium acetate and in addition acid or alkaline components in such a quantity that a 0.1 to 10 % aqueous solution or suspension with a dispersing agent has a pH valve of at least 6.5 and not more than 9.0.

2. An agent according to Claim 1, characterised in that as acid components it contains low carboxylic acids or inorganic acids, preferably acetic acid.

3. An agent according to Claim 1, characterised in that as alkaline components it contains oxides, hydroxides and/or carbonates of earth alkali metals, preferably calcium and/or magnesium.

4. An agent according to one of the preceding Claims, characterised in that it contains not more than 90 % by weight and preferably 30 to 60 % by weight of magnesium acetate.

5. An agent according to Claim 1, characterised in that to achieve a very fine and even droplet size, it contains added formulation agents based on polyoxyethylene ethers or esters.

6. An agent according to Claim 1, characterised in that for applications in powder form or for spraying onto leaves and needles, it is blended with inert carrier substances.

## Revendications

1. Agents ou compositions de protection et de lutte contre les endommagements de la végétation, par exemple de jeunes conifères, provoqués par des perturbations nutritives, plus particulièrement causés par des pluies acides ou des immissions acides sur des sols pauvres en magnésium et en calcaire ou dans les manifestations de carence des plantes, se présentant sous forme dissoute, sous forme de suspension ou sous forme solide, contenant des sels de calcium et de magnésium, comme aussi de faibles quantités de composés du potassium, du fer et du manganèse solubles dans l'eau, mais aussi des stabilisants, comme aussi des agents mouillants dans le cas de compositions liquides destinées à l'application sur les feuilles ou les aiguilles, caractérisées en ce que les compositions ou les agents contiennent de l'acétate de calcium et de l'acétate de magnésium et, complémentairement, des composants acides ou alcalins, en une proportion telle qu'une suspension avec un agent dispersif ou une solution, aqueuse, à 0,1 10 % présente une valeur de pH d'au moins 6,5 et d'au maximum 9,0.

2. Compositions suivant la revendication 1, caractérisées en ce qu'à titre de composant acide, elles contiennent des acides carboxyliques inférieurs ou des acides inorganiques, de préférence l'acide acétique.

3. Compositions suivant la revendication 1, caractérisées en ce qu'à titre de composants alcalins, elles contiennent des oxydes, hydroxydes et/ou carbonates de métaux alcalino-terreux, de préférence du calcium et/ou du magnésium.

4. Compositions suivant l'une des revendications précédentes, caractérisées en ce qu'elles contiennent au maximum 90 % en poids, de préférence 30 à 60 % en poids, d'acétate de magnésium.

5. Compositions suivant la revendication 1, caractérisées en ce qu'en vue de l'obtention d'un calibre de gouttelettes très fin et uniforme, elles contiennent, à titre d'additif, des agents de mise en composition, à base d'esters ou d'éthers de polyoxyéthylène.

6. Compositions suivant la revendication 1, caractérisées en ce qu'en vue de leurs applications sous forme pulvérulente ou leur pulvérisation ou saupoudrage sur les feuilles et les aiguilles, elles sont diluées avec des substances servant de véhicule inertes.